# EUROPÄISCHE PATENTANMELDUNG

(11) **EP 1 370 102 A1**
(43) Veröffentlichungstag der Anmeldung: **10.12.2003**
(21) Anmeldenummer: 02023550.3
(22) Anmeldetag: 22.10.2002
(51) Int. Cl.: H04Q 7/38, H04M 3/42

(54) **Verfahren und System zum Leiten von Kommunikation**

(71) Anmelder: SIEMENS AKTIENGESELLSCHAFT, 80333 München (DE)
(72) Erfinder: Wilhelm, Hartmut, Dr., 81477 München (DE)

(57) **Zusammenfassung**

Die Erfindung betrifft ein Verfahren zum Leiten von Kommunikation von einem ersten Kommunikationsteilnehmer zu einem zweiten Kommunikationsteilnehmer, aufweisend die Verfahrensschritte Prüfen (1) der Anwesenheit des zweiten Kommunikationsteilnehmers an einem Aufenthaltsort bzw. einem vermuteten Aufenthaltsort und/oder Bestimmen des Aufenthaltsorts bzw. eines vermuteten Aufenthaltsorts, und Leiten (3) der Kommunikation zu mindestens einem für einen Empfang der Kommunikation an dem Aufenthaltsort bzw. vermuteten Aufenthaltsort verfügbaren Kommunikationsmittel (10, 11, 12). In einer bevorzugten Ausführungsform wird, falls kein Kommunikationsmittel ermittelt wurde, die Kommunikation zu einem Speichermedium 14 umgeleitet.

## Beschreibung

Die vorliegende Erfindung betrifft ein Verfahren und ein System zum Leiten von Kommunikation von einem ersten Kommunikationsteilnehmer zu einem zweiten Kommunikationsteilnehmer.

Derartige Verfahren und Systeme können unter Anderem in Unternehmen mit einer Vielzahl von Büroarbeitsplätzen Anwendung finden.

Viele Nutzer von Kommunikationseinrichtungen halten sich nicht ständig an einem festen Ort auf. Dennoch wollen solche Nutzer ständig alle eingehenden Kommunikationen erhalten. Um unter der gleichen E-Mail-Adresse oder der gleichen Rufnummer an unterschiedlichen Orten erreichbar zu sein, muss man sich in der Regel an einem Rechner ab- und an einem anderen Rechner anmelden. Alternativ ist es möglich, eine Rufumleitung von Hand zu programmieren oder ein betriebsbereites Endgerät ständig mit sich zu führen.

Mit den bekannten Lösungen ist jedoch nur mit hohem Aufwand für den Nutzer möglich, an beliebigen Orten, wie beispielsweise dem häuslichen Wohn- oder Arbeitszimmer, dem Auto, dem festen Büroarbeitsplatz oder einem temporären Laborarbeitsplatz unter einer Adresse bzw. Nummer erreichbar zu sein. Bei bekannten mobilen Endgeräten erfolgt ohne vorherige Vorkehrung auch eine Störung durch eingehende Kommunikation an Orten wie beispielsweise Besprechungszimmer, Kantine oder WC.

Somit liegt der vorliegenden Erfindung die Aufgabe zugrunde, ein Verfahren bzw. ein System zum Leiten von Kommunikation bereitzustellen, welches die Nachteile des Standes der Technik vermeidet.

Diese Aufgabe wird durch ein Verfahren zum Leiten von Kommunikation gemäß dem unabhängigen Anspruch 1 gelöst. Eine weitere Lösung der Aufgabe stellt ein System zum Leiten von Kommunikation gemäß dem unabhängigen Anspruch 19 dar. Vorteilhafte Weiterbildungen der Erfindung ergeben sich aus den abhängigen Ansprüchen.

Die vorliegende Erfindung betrifft ein Verfahren zum Leiten von Kommunikation von einem ersten Kommunikationsteilnehmer zu einem zweiten Kommunikationsteilnehmer, aufweisend die Verfahrensschritte
- Prüfen der Anwesenheit des zweiten Kommunikationsteilnehmers an einem Aufenthaltsort bzw. einem vermuteten Aufenthaltsort und/oder Bestimmen des Aufenthaltsorts bzw. eines vermuteten Aufenthaltsorts, und
- Leiten der Kommunikation zu mindestens einem für einen Empfang der Kommunikation an dem Aufenthaltsort bzw. vermuteten Aufenthaltsort verfügbaren Kommunikationsmittel.

Bei der Kommunikation im Sinne der vorliegenden Erfindung kann es sich um jede Art von Telekommunikation bzw. elektrischer Kommunikation handeln, bevorzugt jedoch um Sprachkommunikation. Insbesondere sind davon E-Mails, Telefaxe, Fernschreiben, Telefonanrufe, Videoanrufe, Microsoft (TM)-Netmeeting-Anrufe, sofort übermittelte Botschaften (sogenannte Instant-Messages), oder personenbezogene Lautsprecherdurchsagen umfasst. Kommunikationsteilnehmer im Sinne der vorliegenden Erfindung muss nicht auf zwei Kommunikationsteilnehmer beschränkt sein, sondern kann auch eine Gruppe von Kommunikationsteilnehmern umfassen, die untereinander kommunizieren, oder beispielsweise auch zwei oder mehr Gruppen, die miteinander kommunizieren. Bei den Kommunikationsmitteln handelt es sich beispielsweise um Einrichtungen zur Einund/oder Ausgabe, Telekommunikations-Endgeräte und Bildschirm-Terminals. Bevorzugt handelt es sich bei dem Kommunikationsmittel um ein Autotelefon oder ein tragbares Mobiltelefon. Autotelefon bezieht sich dabei allgemein auf Mobilfunkendgeräte in Fahrzeugen, insbesondere fest eingebaute. Bei dem Aufenthaltsort im Sinne der vorliegenden Erfindung handelt es sich nicht nur um einen statisch festgelegten Ort, sondern beispielsweise auch um einen Gang, den der Nutzer gerade entlang läuft, oder ein bewegtes Fahrzeug. Nicht immer lässt sich der Aufenthaltsort sicher feststellen, aber oftmals gibt es Indizien, Regeln oder Hinweise darauf, wo sich der zweite Kommunikationsteilnehmer aufhält. Diese Indizien, Regeln oder Hinweise können von technischen Vorrichtungen verarbeitet werden. Dass diese Vorrichtungen dabei auch einmal falsch entscheiden können, soll mit "Aufenthaltsort bzw. vermuteter Aufenthaltsort" zum Ausdruck gebracht werden. Unter Umständen können auch mehrere Aufenthaltsorte in Frage kommen, zu denen die Kommunikation nacheinander oder gleichzeitig geleitet werden kann. Leiten im Sinne der vorliegenden Erfindung bezieht sich auf den Weg, insbesondere auf den Ort der Quelle und den Ort der Senke einer Kommunikation, und ist nicht primär im Sinne elektrischer Leitung zu verstehen. Eine Leitung kann beispielsweise durch eine Anrufumleitung zum jeweils nächstgelegenen Telefon erfolgen.

Bevorzugt werden Informationen über den Aufenthaltsort bzw. vermuteten Aufenthaltsort des zweiten Kommunikationsteilnehmers gewonnen und/oder ausgewertet. Unter Berücksichtigung dieser Informationen kann entschieden werden, zu welchen Kommunikationsmitteln Kommunikation für den zweiten Kommunikationsteilnehmer geleitet wird. Bevorzugt geht also dem Leiten die Auswahl mindestens eines Kommunikationsmittels voraus, wobei die Auswahl schon getroffen werden kann, bevor Kommunikation für den zweiten Kommunikationsteilnehmer eintrifft.

In einer bevorzugten Ausführungsform der vorliegenden Erfindung werden die an dem Aufenthaltsort bzw. vermuteten Aufenthaltsort des zweiten Kommunikationsteilnehmers verfügbaren Kommunikationsmittel ermittelt.

In einer weiteren bevorzugten Ausführungsform der vorliegenden Erfindung wird, falls kein Kommunikationsmittel verfügbar ist und/oder ermittelt wurde, die Kommunikation zu einem Speichermedium umgeleitet. Bei dem Speichermedium kann es sich beispielsweise um einen Anrufbeantworter handeln. Anrufbeantworter soll hier nicht auf das Endgerät für den Heimbereich beschränkt verstanden werden, sondern auch andere Lösungen, wie sie beispielsweise unter dem Namen Sprachbox und Mobilbox bekannt sind, einschließen. Anstelle eines Speichermediums kann auch eine Vorrichtung zum automatischen Beantworten, beispielsweise mit einer Ansage oder mit einem zum ersten Kommunikationsteilnehmer gesandten Hinweistext, zum Einsatz kommen.

In einer anderen Ausführungsform kann bei Abwesenheit des zweiten Kommunikationsteilnehmers eine Rufumleitung gesetzt werden, insbesondere eine Rufumleitung auf ein tragbares Mobiltelefon. Bei Anwesenheit des zweiten Kommunikationsteilnehmers kann die Rufumleitung aufgehoben werden.

Endet die Präsenz des zweiten Kommunikationsteilnehmers an einem bestimmten Aufenthaltsort, so kann vorgesehen sein, dass die Kommunikation nicht mehr zu diesem Aufenthaltsort umgeleitet wird. Es ist denkbar, dass die Kommunikation in einem solchen Fall an einen anderen Ort umgeleitet wird, an welchem sich der zweite Kommunikationsteilnehmer anschließend befindet bzw. von dem anzunehmen ist, dass sich der zweite Kommunikationsteilnehmer dorthin begibt. Letzteres ist insbesondere dann vorteilhaft, wenn an dem Ort, zu dem sich der zweite Kommunikationsteilnehmer begibt, keine geeignete Einrichtung zum Erkennen der Anwesenheit bzw. Nähe des zweiten Kommunikationsteilnehmers und zum Verändern des Zielortes der Kommunikation vorhanden ist.

In einer weiteren bevorzugten Ausführungsform erfolgt die Leitung der Kommunikation automatisch. Dies bedeutet, dass der Aufenthaltsort des zweiten Kommunikationsteilnehmers automatisch ermittelt wird und eine Leitung der Kommunikation automatisch, d.h. ohne eine Auswahlmöglichkeit, zu dem zweiten Kommunikationsteilnehmer erfolgt.

In einer vorteilhaften Weiterbildung kann auch, wenn einem Kommunikationswunsch an einem ersten Kommunikationsmittel nach einer vorbestimmten Zeit nicht entsprochen wurde, beispielsweise wenn nach dreimaligem Läuten eines Telefons noch niemand abhebt, der Kommunikationswunsch an ein weiteres Kommunikationsmittel weitergeleitet werden, von dem zu vermuten ist, dass der zweite Kommunikationsteilnehmer sich bei ihm aufhält. Alternativ oder zusätzlich kann, wenn einem Kommunikationswunsch nach einer vorbestimmten Zeit nicht entsprochen wurde, die Kommunikation zu einem Speichermedium geleitet werden.

In einer weiteren Ausführungsform kann die Identität oder Kennung des ersten Kommunikationsteilnehmers, beispielsweise seine Rufnummer, die automatische Entscheidung, wohin die Kommunikation geleitet wird, beeinflussen.

In einer alternativen Ausführungsform erfolgt die Leitung der Kommunikation aufgrund einer Auswahl durch den ersten Kommunikationsteilnehmer, wobei diesem verfügbare Kommunikationsmittel mitgeteilt werden. Dabei ist denkbar, dass dem ersten Kommunikationsteilnehmer sämtliche verfügbare Kommunikationsmittel oder nur eine Auswahl der verfügbaren Kommunikationsmittel mitgeteilt werden. Der erste Kommunikationsteilnehmer kann somit bestimmen, an welches Kommunikationsmittel bei dem zweiten Kommunikationsteilnehmer er die Kommunikation geleitet haben möchte.

In einer weiteren bevorzugten Ausführungsform der vorliegenden Erfindung gehen in die Bestimmung des Aufenthaltsortes des zweiten Kommunikationsteilnehmers Daten hinsichtlich des üblichen Aufenthaltsortes des zweiten Kommunikationsteilnehmers und/oder die Uhrzeit ein. Insbesondere beim Verlassen des zweiten Kommunikationsteilnehmers eines bestimmten Aufenthaltsortes kann zeitabhängig, insbesondere uhrzeitabhängig, bestimmt werden, wohin die Kommunikation umgeleitet werden soll. So kann beispielsweise berücksichtigt werden, dass sich der zweite Kommunikationsteilnehmer üblicherweise jeden Tag um 9.00 Uhr in der Cafeteria befindet, oder dass er, wenn er den Büroarbeitsplatz am späten Vormittag verlässt, zumeist eine Viertelstunde später in der Bibliothek erreichbar ist.

In einer weiteren Ausführungsform wird der Aufenthaltsort eines dem zweiten Kommunikationsteilnehmer zugeordneten Kommunikationsmittels bestimmt. Zur Bestimmung des Aufenthaltsortes können weitere Informationen, insbesondere Informationen über ein dem zweiten Kommunikationsteilnehmer zugeordnetes Kommunikationsmittel, wie beispielsweise ein Mobilfunk-Endgerät, berücksichtigt werden.

In einer Weiterbildung der vorliegenden Erfindung wird unter Verwendung eines biometrischen Verfahrens zur Erkennung von Personen der Aufenthaltsort bzw. vermutete Aufenthaltsort des zweiten Kommunikationsteilnehmers bestimmt oder seine Anwesenheit an einem Aufenthaltsort bzw. vermuteten Aufenthaltsort geprüft. Mitteln, die über biometrische Methoden den zweiten Kommunikationsteilnehmer erkennen, werden dabei Kommunikationsmittel an Orten, an denen der zweite Kommunikationsteilnehmer erreichbar sein möchte, zugeordnet. Kommunikation für den zweiten Kommunikationsteilnehmer wird entsprechend geleitet. Biometrische Methoden ermöglichen eine Erkennung, beispielsweise anhand des Fingerabdrucks, anhand des Aussehens, insbesondere der Gesichtszüge, anhand des Augenhintergrunds, anhand der Stimme und/oder anhand des Körpergeruchs. Auch die Erkennung von Marken mit Identifizierungsfunktion, die fest mit dem Körper verbunden sind, insbesondere von implantierten Chips, soll zu biometrischen Methoden gemäß der vorliegenden Erfindung gerechnet werden. Bevorzugt wird der Aufenthalt in einem Raum, an einem Arbeitsplatz oder in der Nähe zu einem Kommunikationsmittel ermittelt. Zur Erkennung kann eine Aktion des zweiten Kommunikationsteilnehmers erforderlich sein, beispielsweise, dass er vorgegebene Worte spricht, einen Finger auf einen Sensor legt oder in eine Kamera schaut.

In einer anderen Weiterbildung der vorliegenden Erfindung wird unter Verwendung einer Zugangskontrolleinrichtung der Aufenthaltsort bzw. vermutete Aufenthaltsort des zweiten Kommunikationsteilnehmers bestimmt oder seine Anwesenheit an einem Aufenthaltsort bzw. vermuteten Aufenthaltsort geprüft. Für die Zugangskontroll-Einrichtung sind verschiedene Möglichkeiten einsetzbar. So kann eine Zugangsbeschränkung/kontrolle durch mechanische Schlösser und Schlüssel erfolgen. Bei einigen Systemen hängt der Schlüssel nicht oder nicht nur vom Schloss, sondern auch von seinem Besitzer ab. Dabei kann bei Verwendung des Schlüssels nicht nur erkannt werden, dass es sich um einen Zugangsberechtigten handelt, sondern auch auf die Person geschlossen werden. So kann bei Kraftfahrzeugen ein Schlüssel verwendet werden, um den Fahrer vor dem Einsteigen zu identifizieren und seine gespeicherten persönlichen Einstellungen, z.B. Einstellung des Spiegels, aufzurufen. Des Weiteren kann die Zugangskontrolle mittels maschinell lesbare Gegenstände wie Karten oder Ausweisen, beispielsweise mit Barcode, Magnetstreifen oder Chip, erfolgen. Aus der Information, wo der zweite Kommunikationsteilnehmer erkannt wurde, kann oftmals auch geschlossen werden, wohin er geht. Dem entsprechend kann dorthin die ankommende Kommunikation (um)geleitet werden.

Bevorzugt kann die Zugangskontrolleinrichtung eines Fahrzeugs auf die Anwesenheit des zweiten Kommunikationsteilnehmers schließen, insbesondere auf seine Anwesenheit auf dem Fahrerplatz. Die Zugangskontrolleinrichtung eines Fahrzeugs umfasst beispielsweise Schließanlage und Schlösser, Zentralverriegelung und/oder Wegfahrsperre. Das Fahrzeug, das neben der Zugangskontrolleinrichtung z.B. auch Bordcomputer und Steuergeräte aufweisen kann, leitet eine entsprechende Information und/oder ein Aktivierungskommando an ein Mobilfunkendgerät im Fahrzeug weiter. Falls noch nicht der Fall, wird das Mobilfunkendgerät betriebsbereit.

In einer Weiterbildung übermittelt das Fahrzeug dem Mobilfunkendgerät eine PIN (Personal Identification Number), insbesondere die PIN des zweiten Kommunikationsteilnehmers zu einer SIM, die im Mobilfunkendgerät im Fahrzeug eingelegt ist. Die SIM schließt sinngemäß Entsprechendes bei anderen Standards als dem GSM (Global System for Mobile Communications) -Standard, beispielsweise USIM bei UMTS (Universal Mobile Telecommunication System), ein.

Bevorzugt wird in einem Fahrzeug auf Anwesenheit eines bekannten Kommunikationsteilnehmers geprüft. Es kann in einer Ausführungsform auf die Anwesenheit des zweiten Kommunikationsteilnehmers im Fahrzeug daraus geschlossen wird, dass sich ein ihm zugeordneter Fahrzeugschlüssel in einem Zündschloss befindet. Bevorzugt wird die Anwesenheit des zweiten Kommunikationsteilnehmers anhand eines Schlüssels, insbesondere eines Fahrzeugschlüssels, erkannt.

In einer Weiterbildung der vorliegenden Erfindung wird unter Verwendung eines Verfahrens zur Positionsbestimmung der Aufenthaltsort bzw. vermutete Aufenthaltsort des zweiten Kommunikationsteilnehmers bestimmt oder seine Anwesenheit an einem Aufenthaltsort bzw. vermuteten Aufenthaltsort geprüft. Positionsbestimmung im Sinne der vorliegenden Erfindung ist sowohl absolut als auch relativ in Bezug auf eine Einrichtung, insbesondere eine Telekommunikationseinrichtung oder Kommunikationsmittel gemeint. Teilweise kann es genügen, die Nähe des Nutzers oder ihm zugeordneter Mittel zu einer Einrichtung festzustellen, wobei die Richtung in Bezug auf die Einrichtung oft unerheblich ist.

Bei dem Verfahren zur Positionsbestimmung handelt es sich bevorzugt um elektronische Verfahren, beispielsweise Techniken wie Radar, Peilung, Funkfeuer, Satellitennavigation wie GPS (Global Positioning System) oder Techniken für ortsabhängige Dienste LCS (Location Services) im Mobilfunk wie OTD (Observed Time Difference) und darauf aufbauende Verfahren. Bei Systemen mit geringer Reichweite kann bereits das Zustandekommen einer Übertragung, eventuell gekoppelt mit einer Mindestfeldstärke oder einem maximalen Pfadverlust, auf eine so geringe Distanz zwischen Sender und Empfänger schließen lassen, dass die Position mit ausreichender Genauigkeit bestimmt werden kann.

Weiter bevorzugt führt der zweite Kommunikationsteilnehmer eine Einrichtung mit sich, die eine Positionsbestimmung ermöglicht. Dies kann beispielsweise ein Mobilfunk-Endgerät sein, welches ortsabhängige Dienste oder Positionierung unterstützt. In Abhängigkeit seines Aufenthaltsortes kann die Einrichtung die Leitung von Kommunikation, insbesondere ankommender Kommunikation wie eintreffender E-Mails, Anrufe und Telefaxe beeinflussen. So können bei einem Mobilfunk-Endgerät etwa Telefonanrufe je nach Aufenthaltsort, eventuell in Verbindung mit dem bisher zurückgelegten Weg und/oder Datum/Zeit auf nahegelegene Festnetzapparate, auf das Mobilfunk-Endgerät selbst oder auf einen Anrufbeantworter geleitet werden.

Wenn der zweite Kommunikationsteilnehmer von verschiedenen Endgeräten aus kommuniziert, er aber bei abgehender Kommunikation dem System als Nutzer bekannt ist, kann seine eigene Identität anstelle der der tatsächlich verwendeten Endgeräte dem Netz gemeldet werden. Wenn ein Mitarbeiter beispielsweise vom Labor aus anruft, wo er an seinem temporären Arbeitsplatz identifiziert wurde, kann dem Angerufenen seine Haupt-Rufnummer anstelle der Rufnummer des Laborarbeitsplatzes und/oder sein Name übermittelt werden.

Wenn die Einrichtung, die zuletzt die Anwesenheit oder Nähe des Nutzers erkannt hat, beweglich ist, beispielsweise bei einer Einrichtung in einem Fahrzeug, kann es auch ortsabhängig sein, wohin die Kommunikation beim Verlassen des Aufenthaltsortes geleitet wird. Bevorzugt werden in einem solchen Fall Mittel zur Positionsbestimmung eingesetzt.

Die eingangs gestellte Aufgabe wird auch durch ein System zur Leitung von Kommunikation von einem ersten Kommunikationsteilnehmer zu einem zweiten Kommunikationsteilnehmer gelöst. Das System weist
- Mittel zum Prüfen der Anwesenheit des zweiten Kommunikationsteilnehmers an einem Aufenthaltsort bzw. vermuteten Aufenthaltsort und/oder Bestimmen des Aufenthaltsorts bzw. eines vermuteten Aufenthaltsorts, und
- Mittel zum Leiten der Kommunikation zu mindestens einem für einen Empfang der Kommunikation an dem Aufenthaltsort bzw. vermuteten Aufenthaltsort verfügbaren Kommunikationsmittel
auf.

Die Erfindung betrifft des Weiteren ein Mobilfunk-Endgerät zur Verwendung mit einem erfindungsgemäßen Verfahren und/oder zur Verwendung in einem erfindungsgemäßen System.

Ferner betrifft die Erfindung eine SIM zur Verwendung mit einem erfindungsgemäßen Verfahren und/oder zur Verwendung in einem erfindungsgemäßen System. Die Erfindung betrifft auch eine Informationsverbindung zwischen einer Zugangskontrolleinrichtung eines Fahrzeugs, insbesondere einem Schloss, und einem Mobilfunkendgerät in dem Fahrzeug zur Verwendung mit einem erfindungsgemäßen Verfahren und/oder zur Verwendung in einem erfindungsgemäßen System.

Um die Kommunikation geeignet umzuleiten, können Einrichtungen, die den Weg und/oder den Zielort von Kommunikationen beeinflussen, geeignet beeinflusst werden. Solche zu beeinflussenden Einrichtungen können beispielsweise Server, z.B. ein Mailserver, Vermittlungsanlagen, insbesondere für Telephonie, oder Router sein. Sofern die Einrichtung, die Information über den Ort des Nutzers auswertet, und die Einrichtung, welche Weg/Zielort der Kommunikation beeinflusst, getrennt sind, signalisiert die auf den vermutlichen Aufenthaltsort schließende Einrichtung der Einrichtung, welche Weg/Zielort beeinflusst, wo sich der Nutzer vermutlich aufhält. Die Signalisierung kann auch mehrere in Frage kommende Orte umfassen. Sie kann beispielsweise Rufnummern enthalten.

Die Erfindung wird im Folgenden unter Hinweis auf die beigefügte Zeichnung anhand von Ausführungsbeispielen näher erläutert. Die dort dargestellten Merkmale und auch die bereits oben beschriebenen Merkmale können nicht nur in der genannten Kombination, sondern auch einzeln oder in anderen Kombinationen erfindungswesentlich sein. Es zeigt:

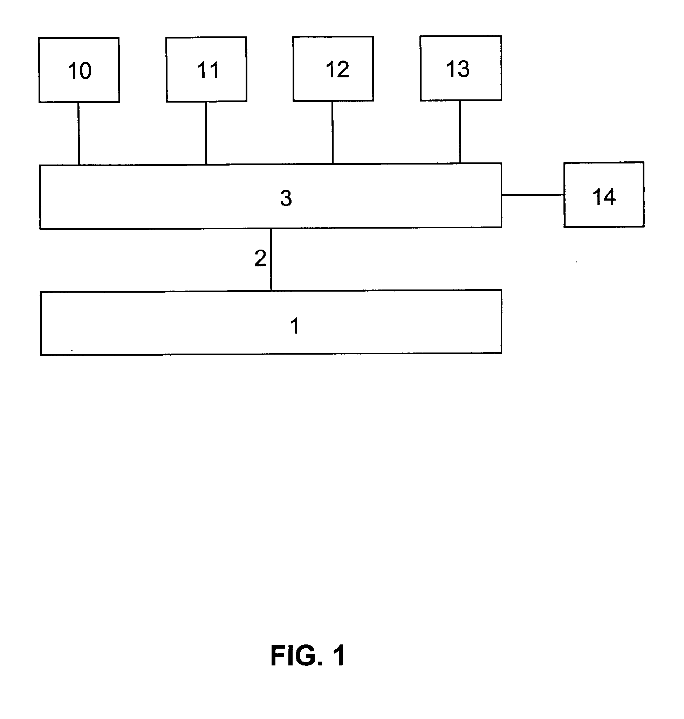

- Figur 1: eine schematische Darstellung eines Ausführungsbeispiels der vorliegenden Erfindung.

Figur 1 zeigt schematisch eine Firma mit mehreren Büro-Arbeitsplätzen. In einem Büroraum befindet sich ein Telefonapparat 10. Es wird angenommen, dass der Meister A der Firma hauptsächlich an seinem Büro-Arbeitsplatz arbeitet, sich zeitweise aber auch in einem Elektronik-Labor und in einer mechanischen Werkstatt aufhält, wo auch jeweils Telefonapparate 11 bzw. 12 vorhanden sind. Eine Einrichtung 1 erkennt zu einem Zeitpunkt t₀, dass der Meister A die mechanische Werkstatt betritt. Die Einrichtung 1 signalisiert der Nebenstellenanlage 3 über einen Übertragungsweg 2, dass der Meister A in der mechanischen Werkstatt zum Zeitpunkt t₀ erkannt wurde. Die Nebenstellenanlage 3 kennt die zugehörige Rufnummer des dortigen Telefonapparates 12. Sie hat keine Information darüber, ob sich der Meister A zu einem Zeitpunkt t>t₀ immer noch in der mechanischen Werkstatt aufhält. Bei einem späteren Anruf von Mitarbeiter B von dessen Apparat 13 aus leitet die Nebenstellenanlage 3 den Ruf deshalb zunächst auf den Apparat 10 im Büro von Meister A um. Wird der Ruf dort nicht innerhalb der vorbestimmten Zeit von beispielsweise 15 Sekunden entgegengenommen, so wird Mitarbeiter B in der Anzeige seines Apparates 13 die Umleitung "-> mechanische Werkstatt" angezeigt und der Ruf wird in die mechanische Werkstatt umgeleitet. Wird der Ruf dort nicht binnen eines weiteren Zeitintervalls, beispielsweise 15 Sekunden, angenommen, so wird auf einen Anrufbeantworter 14 umgeleitet. Wenn der Meister A in sein Büro zurückkehrt, erkennt dies die Einrichtung 1 und ersetzt die nach 15 Sekunden wirksame Anrufumleitung in die mechanische Werkstatt durch eine nach 15 Sekunden wirksame Umleitung zum Anrufbeantworter 14. Im Elektronik-Labor wird nicht nur der Zugang erkannt, sondern auch die Anwesenheit. Begibt sich der Meister A ins Elektronik-Labor, so erkennt dies die Einrichtung 1 und signalisiert der Nebenstellenanlage 3, dass sich der Meister A dort aufhält. Anrufe für Meister A werden nun sofort direkt zum dortigen Telefonapparat 11 durchgestellt. In der Anzeige des Anrufenden erscheint "-> Elektronik-Labor". Nach beispielsweise 15 Sekunden wird ein nicht angenommener Anruf zum Anrufbeantworter 14 weitergeleitet. Wenn der Meister A das Elektronik-Labor verlässt, signalisiert die Einrichtung 1 dies der Nebenstellenanlage 3. Nun werden Anrufe für Meister A wieder in dessen Büro geleitet und, falls sie dort nicht innerhalb von 15 Sekunden entgegengenommen werden, werden sie wiederum zum Anrufbeantworter 14 umgeleitet.

In einem weiteren Ausführungsbeispiel wird von einem Unternehmen ausgegangen, in dem Mitarbeiter individuelle Büroarbeitsplätze und gemeinschaftliche Laborarbeitsplätze, an denen sie sich Bildschirmarbeitsplätze zu mehreren teilen, haben. An einem Mehrbenutzer-Bildschirmarbeitsplatz weist die Computermaus einen Fingerabdruck-Sensor auf. Damit kann der aktuelle Nutzer erkannt werden. Je nach erkanntem Nutzer werden die jeweiligen Dateien des Nutzers verfügbar, und E-Mails für den jeweiligen Nutzer werden zu diesem Bildschirmarbeitsplatz geleitet. Dazu informiert der E-Mail-Client des Mehrbenutzer-Bildschirmarbeitsplatzes den Mailserver. Ferner informiert der Rechner des Mehrbenutzer-Bildschirmarbeitsplatzes auch die Telefonvermittlungsanlage, welche daraufhin Anrufe für den jeweiligen aktuellen Nutzer zu diesem Arbeitsplatz leitet. Diese Vorgehensweise erspart dem Mitarbeiter, sich von Hand am Büroarbeitsplatz vom Mailserver abzumelden und sich am Labor-Mehrbenutzer-Bildschirmarbeitsplatz anzumelden. Des Weiteren braucht er auch nicht stets von Hand eine Anrufumleitung auf den temporären Arbeitsplatz im Labor zu programmieren. Bei Arbeitsplätzen, die mit einer Kamera ausgerüstet sind - beispielsweise einer Webcam auf dem Monitor für Microsoft Netmeeting - kann durch Erkennung der Gesichtszüge anstelle des Fingerabdrucks der Mitarbeiter sogar berührungslos erkannt werden.

In einem weiteren Ausführungsbeispiel wird eine kerntechnische Anlage mit einem Sicherheitsbereich, in welchem die Nutzung zellularen Mobilfunks wegen der Abschirmung durch dicke Stahlbetonwände nicht möglich ist, angenommen. Die Gänge und Räume dieses Bereichs sind mit Videokameras ausgerüstet, um im Störfall vermisste Mitarbeiter lokalisieren zu können. Mit Hilfe der Videoüberwachung wird der Aufenthaltsort der Mitarbeiter durch optische Erkennung automatisch bestimmt. In den Gängen gibt es teils nur Lautsprecher, teils auch Freisprecheinrichtungen, und in den Räumen gibt es Telefone. Anrufe werden nun in Abhängigkeit des Aufenthaltsorts des gewünschten Gesprächspartners in den betreffenden Gang oder Raum geleitet. Wenn der gewünschte Gesprächspartner sich in einem Raum aufhält, klingelt dort das dem Mitarbeiter nächst gelegene Telefon, und der Anrufende hört einen Freiton, bis der Anruf angenommen wird. Wenn der Mitarbeiter sich in einem Gang aufhält, wird der Anruf in den entsprechenden Gang geschaltet, und der Anrufer erhält eine Signalisierung auf der Anzeige seines Telefonapparates darüber, ob eine Simplex- oder eine Duplexverbindung besteht. Dem Anrufer kann die Raum-/Gangnummer angezeigt werden, zu der der Ruf geschaltet wurde.

In einem weiteren Ausführungsbeispiel hat ein Ehepaar zwei Fahrzeuge mit Autotelefon und Navigationssystem. Das Autotelefon hat Platz für mehrere SIM (Subscriber Identity Module)-Karten, sogenannte SIMs. Der Ehemann hat ein Paar Twin-SIMs, die Ehefrau hat auch ein Paar Twin-SIMs sowie eine weitere SIM für ihr tragbares Mobiltelefon. Beide Eheleute haben in jedes Autotelefon je eine ihrer Twin-SIMs eingelegt. Sie haben auch die zugehörigen PINs (Personal Identification Number) eingegeben. Jedes Autotelefon hat die PINs abgespeichert, so dass es sie nach dem Einschalten selbsttätig eingibt. Wenn die SIMs aus dem Autotelefon herausgenommen werden oder wenn die Spannungsversorgung des Autotelefons unterbrochen wurde, müssen die PINs neu eingegeben werden. Die Eheleute geben potentiellen Anrufern die Rufnummern ihrer Twin-SIMs. Über ein Erkennungsmittel erkennen die Autotelefone die Anwesenheit der Nutzer der eingelegten SIMs. Beispielsweise kann dies über im Fußraum von Fahrer und Beifahrer angebrachte Sensoren, die ähnlich einer Hundenase Personen anhand des Körpergeruchs erkennen, erfolgen. Wenn der Ehemann den Fahrerplatz verlässt, wird eine Rufumleitung geschaltet. Verlässt er den Fahrerplatz zu Hause, wird auf seinen häuslichen Festnetzanschluss umgeleitet. Verlässt er ihn auf seinem Firmenparkplatz, so wird auf seine dienstliche Rufnummer umgeleitet. Verlässt er ihn an einem anderen Ort, so wird auf einen Anrufbeantworter umgeleitet.

Wenn die Ehefrau den Fahrerplatz verlässt, wird eine Rufumleitung geschaltet. Verlässt sie den Fahrerplatz zu Hause, wird auf einen häuslichen Festnetzanschluss umgeleitet. Verlässt sie ihn auf ihrem Firmenparkplatz, so wird auf ihre dienstliche Rufnummer umgeleitet. Verlässt sie ihn an einem anderen Ort, so wird auf ihr Mobiltelefon umgeleitet. Setzt sich die Ehefrau auf den Beifahrerplatz, so wird auf ihr Mobiltelefon umgeleitet. Verlässt sie den Beifahrerplatz zu Hause, wird auf den häuslichen Festnetzanschluss umgeleitet. Verlässt sie ihn auf ihrem Firmenparkplatz, so wird auf ihre dienstliche Rufnummer umgeleitet. Verlässt sie ihn an einem anderen Ort, so bleibt auf ihr Mobiltelefon umgeleitet.

Setzt sich der Ehemann auf den Fahrerplatz, so wird das Autotelefon mit seiner SIM aktiviert, und Anrufumleitungen werden aufgehoben. Setzt sich die Ehefrau auf den Fahrerplatz, so wird das Autotelefon mit ihrer SIM aktiviert, und Anrufumleitungen werden aufgehoben.

Zumindest eines der Autotelefone kann auch so programmiert werden, dass es datums-/uhrzeitgesteuert Anrufumleitungen verändert, z.B. nach 21 Uhr abends auf die Sprachbox umleitet, damit man zu Hause nicht mehr gestört wird. Wenn das Autotelefon zuvor die aktuelle Einstellung der Rufumleitung abfragt und speichert, wenn es die Nacht über für die betreffende SIM nicht genutzt wird und wenn es morgens prüft, ob nach wie vor auf die Sprachbox umgeleitet ist, kann es beispielsweise um 7 Uhr die alte Einstellung wiederherstellen. Sollte es über Nacht für die betreffende SIM genutzt worden sein oder am nächsten Morgen die abends programmierte Rufumleitung nicht mehr bestehen, so wird das Autotelefon bevorzugt die aktuelle Einstellung nicht verändern.

Vorteile ergeben sich durch die Erreichbarkeit unter einer Rufnummer zu Hause, unterwegs und auf der Arbeit, soweit man erreichbar sein möchte, ohne dass Anrufumleitungen von Hand programmiert werden müssen. Des Weiteren braucht man zu Hause und auf der Arbeit kein Mobiltelefon mit sich zu führen, und wird auch weniger gestört, wenn man nicht erreichbar sein möchte. Als weiterer Vorteil braucht die Ehefrau ihr Mobiltelefon nicht in eine Kraftfahrzeug-Halterung zu stecken und wieder herauszunehmen. Dies ist insbesondere bei vielen Kurzstreckenfahrten, beispielsweise zur Kindertagesstätte und zum Einkaufen, praktisch.

In einem weiteren Ausführungsbeispiel wird von einem Fahrzeug mit einem Autotelefon und Freisprecheinrichtung sowie einem Fahrer mit einem tragbaren Mobilfunk-Endgerät ausgegangen. Der Fahrer hat je eine SIM für das Autotelefon und eine SIM für sein Mobilfunk-Endgerät. Die Rufnummern für die SIMs sind unterschiedlich. Dem Autotelefon ist die Rufnummer des Mobilfunk-Endgeräts bekannt. Damit der Fahrer nicht stets neu die PIN für seine SIM eingeben muss, kann das Autotelefon die PIN speichern, bis die SIM herausgenommen wird oder die Stromversorgung des Autotelefons unterbrochen wird, beispielsweise zum Diebstahlschutz. Den potentiellen Anrufern ist bevorzugt die Rufnummer der SIM für das Autotelefons bekannt. Das Automobil erkennt über das Zündschloss die Anwesenheit des Fahrers. Wenn der Zündschlüssel im Zündschloss steckt, sollen ankommende Anrufe den Fahrer auf der Freisprecheinrichtung des Autotelefons erreichen. Wenn der Fahrer den Zündschlüssel abzieht, sollen ankommende Rufe zu seinem tragbaren Mobilfunk-Endgerät geleitet werden. Dies wird erreicht, indem das Autotelefon beim Abziehen des Zündschlüssels eine Rufumleitung auf die Rufnummer des tragbaren Mobilfunk-Endgeräts des Fahrers programmiert. Wenn der Schlüssel ins Zündschloss gesteckt wird, wird die Rufumleitung insbesondere für den Sprachdienst aufgehoben, und wenn er herausgezogen wird, wird die Rufumleitung gesetzt. Die Umleitung kann für einige Dienste, z.B. SMS (Short Message Service), permanent zum Mobilfunk-Endgerät des Fahrers gesetzt sein. Bei mehreren SIMs im Autotelefon und bei mehreren, unterscheidbaren Autoschlüsseln funktioniert dies auch bei mehreren Fahrern. Die Fahrer geben potentiellen Anrufern als ihre Mobilrufnummer die Nummer der im Autotelefon eingelegten SIM an, und das Autotelefon leitet je nach Autoschlüssel für die jeweils zugehörige SIM, IMSI (International Mobile Subscriber Identity) bzw. Rufnummer zu einer (im Allgemeinen je nach SIM unterschiedlichen) Mobilrufnummer um oder hebt die jeweilige Anrufumleitung auf. Bei drahtlosen Autoschlüsseln ist die Vorgehensweise ebenfalls anwendbar. Der Begriff Autoschlüssel soll in dieser Erfindung auch Fahrzeugschlüsseln entsprechende Gegenstände, beispielsweise für eine berührungslose Zugangskontrolle, einschließen. Der Netzbetreiber kann, um eine Verwirrung der Angerufenen durch unterschiedliche Mobilrufnummern des Fahrers zu vermeiden, dem Mobilfunk-Endgerät des Fahrers die Rufnummernidentität, d.h. die sogenannte "Calling Line Identity Presentation" des Autotelefons geben. Für ankommende Anrufe bleibt aber die Rufnummer des Handys des Fahrers verschieden von der des Autotelefons.

Dies kann vorteilhaft damit kombiniert werden, dass das Autotelefon beim Abstellen oder Verlassen des Fahrzeugs deaktiviert wird, was z.B. am Ausschalten des Motors oder der Zündung, Abziehen des Zündschlüssels, Schalten des Getriebes auf Parkposition, Einrasten des Lenkradschlosses, Ziehen der Handbremse, Lösen des Sicherheitsgurts, Abschließen des Fahrzeugs, Aktivieren der Wegfahrsperre, Einschalten der Alarmanlage oder Setzen einer Rufumleitung insbesondere für den Sprachdienst für die SIM oder, wenn es mehrere SIMs unterstützt werden, für alle im Autotelefon eingelegten SIMs, festgemacht werden kann. Umgekehrt kann, wenn eine nutzungsberechtigte Person das Fahrzeug besteigt oder startet, was beispielsweise an gegenteiligen Aktionen festgemacht werden kann, das Autotelefon eingeschaltet oder aktiviert werden. Dabei kann der Zündschlüssel als Zugangsberechtigung für die Nutzung der SIM dienen und die Eingabe der PIN von Hand beim Einschalten des Autotelefons ersetzen. Zum Beispiel kann im Bordcomputer gespeichert sein, bei Verwendung welchen Schlüssels das Autotelefon betriebsbereit werden soll, und der Bordcomputer kann gegebenenfalls eine geeignete Information an das Autotelefon senden. Die Information kann bei mehreren, unterscheidbaren Schlüsseln eine Angabe über den zugehörigen Kommunikationsteilnehmer enthalten. So kann das Autotelefon beispielsweise das zugehörige Profil mit Klingelmelodie usw. auswählen, und bei mehreren SIMs auch die zum Fahrzeugschlüssel passende SIM auswählen. Denkbar ist auch beispielsweise, dass ein Bordcomputer die PIN für den Benutzer eingibt. Bei mehreren, unterscheidbaren Fahrzeugschlüsseln und mehreren SIMs kann beispielsweise der Bordcomputer auch jeweils die zum Fahrzeugschlüssel passende PIN eingeben.

Anstelle dieser mehreren SIMs oder in Kombination mit mehreren SIMs ist es auch denkbar, dass eine SIM mehrere Rufnummern bzw. IMSIs unterstützt, wobei beispielsweise durch verschiedene PINs jeweils die zugehörige Rufnummer bzw. IMSI ausgewählt werden kann. Dadurch können verschiedene Fahrer auch dann das Verfahren nutzen, wenn das Autotelefon nur eine SIM-Karte aufnehmen kann.

Im einfachsten Fall kommen also als Kommunikationsmittel zumindest ein Autotelefon und ein tragbares Mobiltelefon in Frage. Wenn die Abwesenheit erkannt wird oder ein anderes Kriterium dafür, dass der zweite Kommunikationsteilnehmer bevorzugt über das tragbare Mobiltelefon telefoniert, erfüllt ist, werden an die Rufnummer des Autotelefons gerichtete Telefonanrufe auf das tragbare Mobiltelefon umgeleitet. Damit ist gemeint, dass eine der Telefonnummer des Autotelefons zugeordnete Anrufumleitung auf das tragbare Mobiltelefon verweist. Das bedeutet noch nicht, dass der Anruf auch tatsächlich beim tragbaren Mobiltelefon ankommt, denn für die Rufnummer des tragbaren Mobiltelefons können weitere Rufumleitungen, beispielsweise zu einem Anrufbeantworter, gesetzt sein. Wenn die Anwesenheit des zweiten Kommunikationsteilnehmers am Autotelefon erkannt wird oder ein anderes Kriterium dafür, dass der zweite Kommunikationsteilnehmer bevorzugt über das Autotelefon telefoniert, erfüllt ist, werden an die Rufnummer des Autotelefons gerichtete Telefonanrufe nach Möglichkeit auch über das Autotelefon geleitet. Diese Möglichkeit ist beispielsweise nicht gegeben, wenn dort, wo sich das Autotelefon befindet, keine Netzabdeckung vorhanden ist.

Die Umleitung bei Abwesenheit kann z.B. dadurch erreicht werden, dass beim Verlassen des Autotelefons eine feste Umleitung zum tragbaren Mobiltelefon gesetzt und umgekehrt bei der Ankunft am Autotelefon die feste Umleitung aufgehoben wird.

In einer Variante wird eine bedingte Umleitung von der Rufnummer des Autotelefons auf die Rufnummer des tragbaren Mobiltelefons eingerichtet, insbesondere für Nichterreichbarkeit. Wenn beim Erreichen des Fahrzeugs, was an Kriterien wie Aufschließen des Fahrzeugs und/oder des Lenkradschlosses, Deaktivieren der Alarmanlage, Aufheben der Wegfahrsperre, Anschnallen, Einschalten der Zündung und/oder Starten des Motors festgemacht werden kann, das Autotelefon aktiviert wird und auf ankommende Anrufe antwortet, telefoniert der zweite Kommunikationsteilnehmer über das Autotelefon. Wenn es nach dem Verlassen deaktiviert ist, greift die bedingte Rufumleitung für Nichterreichbarkeit und leitet den Ruf an die Rufnummer des tragbaren Mobiltelefons weiter.

In einer Weiterbildung wird auch die Möglichkeit vorgesehen, dass insbesondere bei Nichterreichbarkeit (z.B. wenn der zweite Kommunikationsteilnehmer keine Netzabdeckung hat), bei besetzt oder/und bei Nichtannahme (z.B. wenn der zweite Kommunikationsteilnehmer nicht abhebt) der erste Kommunikationsteilnehmer zu einem Speichermedium, insbesondere einer Mobilbox, umgeleitet wird. Bevorzugt wird für die Rufnummer des Autotelefons und für die Rufnummer des tragbaren Mobiltelefons die gleiche Mobilbox verwendet. In einem GSM-Netz wäre nach dem Stand der Technik zum Abhören der Mobilbox zumindest von einem der beiden Kommunikationsmittel aus die Eingabe einer PIN erforderlich. In einer bevorzugten Ausführungsform ordnet jedoch der Netzbetreiber einen Anrufbeantworter, insbesondere eine Mobilbox, den beiden Rufnummern derart zu, dass die Abfrage zumindest aus dem eigenen Netz keine zusätzliche Identifizierung wie beispielsweise die Eingabe einer PIN erfordert.

Folgende Rufumleitungen könnten beispielsweise gesetzt sein:
Autotelefon:
   - bei Nichterreichbarkeit zum tragbaren Mobilfunkendgerät
Tragbares Mobilfunkendgerät:
   - bei Nichtannahme nach einer vorbestimmten, kurzen Zeit zur Mobilbox
   - bei Nichterreichbarkeit zur Mobilbox

In dem Ausnahmefall, dass bei einer Autofahrt bei einem ankommenden Anruf das Autotelefon keinen Empfang hat, aber das tragbare Mobiltelefon Empfang hat, klingelt das tragbare Mobiltelefon nur kurz, und dann wird der erste Kommunikationsteilnehmer zur Mobilbox umgeleitet.

In einem weiteren Ausführungsbeispiel wird von einem Krankenhaus ausgegangen, in dem die Verwendung von Mobiltelefonen untersagt ist. In der geschlossenen psychiatrischen Abteilung sind die Räume und Zugänge videoüberwacht. Zugang wird nur berechtigten Personen gewährt. Die berechtigten Personen werden anhand ihrer Gesichtszüge erkannt. Das Zugangskontrollsystem erkennt dadurch mit hoher Zuverlässigkeit den momentanen Aufenthaltsort des Stationsarztes. Ihn betreffende Anrufe werden nun in den Raum geleitet, den das Zugangskontrollsystem als Aufenthaltsort erkannt hat, beispielsweise Stationszimmer, Behandlungsraum, Teeküche oder Sprechzimmer usw. Dadurch ist das medizinische Personal besser erreichbar als mit den heute eingesetzten Piepsern, die nur einen Gesprächswunsch signalisieren und dann einen Rückruf von einem nahe gelegenen Telefon aus erfordern.

In einem weiteren Ausführungsbeispiel wird von einem Mobilfunk-Endgerät ausgegangen, welches für Positionsbestimmung geeignet ist. Es habe ferner einen Speicher, der eine Zuordnung von Aufenthaltszonen zu dort verfügbaren Festnetz-Telefonanschlüssen und Faxanschlüssen ermöglicht. Dieser Speicher sei geeignet programmierbar. Das Mobilfunk-Endgerät oder/und das Mobilfunknetz messen immer wieder den Standort des Mobilfunk-Endgerätes. In Abhängigkeit des Aufenthaltsortes werden Anrufumleitungen und Faxumleitungen geändert. Eine Änderung einer Umleitung kann Aktionen umfassen wie beispielsweise Einrichten, Setzen, Aufheben, Löschen einer Rufumleitung oder Ersetzen des aktuellen Ziels durch ein neues Ziel. Wenn der Nutzer in seinem Büro ist, werden Anrufe auf den dortigen Telefonapparat geleitet. Faxe werden auf das Faxgerät im Büro geleitet. Wenn der Nutzer in einem fremden Büro ist, wird auf sein Mobilfunk-Endgerät oder einen Telefonapparat im fremden Büro geleitet. Wenn der Nutzer in einem Labor ist, werden Anrufe auf den Telefonapparat im Labor geleitet. Wenn der Nutzer die Firma verlässt, werden Anrufe auf das Mobilfunk-Endgerät geleitet. Wenn er sich auf der Auto-Fahrstrecke zwischen Firma und zu Hause befindet, wird auf das Autotelefon geleitet. Faxe werden auf den Faxspeicher geleitet, welcher netzbasiert sein kann und/oder sich im Mobilfunk-Endgerät befinden kann. Wenn er den Parkplatz zu Hause Richtung Wohnung verlässt, werden die Anrufe wieder auf das Mobilfunk-Endgerät geleitet. Faxe werden auf das häusliche Faxmodem geleitet. Wenn er seine Wohnung betritt, werden die Anrufe auf das häusliche Festnetztelefon geleitet. Wenn der Nutzer sich in der Kantine, im Besprechungsraum, auf dem WC seiner Abteilung oder im Gotteshaus seiner Kirchengemeinde aufhält, werden Anrufe zum Anrufbeantworter geleitet. Wenn insbesondere anhand von Aufenthaltsort und Geschwindigkeitsprofil erkannt wird, dass das Mobilfunk-Endgerät sich auf der Route des städtischen Omnibusses bewegt, in welchem die Benutzung von Mobilfunk-Endgeräten untersagt ist, werden Anrufe zum Anrufbeantworter geleitet. Diese Rufumleitung wird wieder aufgehoben, wenn der Nutzer die Busroute verlässt.

Als weiteres Ausführungsbeispiel wird der Einsatz der vorliegenden Erfindung in einem Unternehmen mit mehreren Mitarbeitern erläutert. Ein Mitarbeiter A hat einen berührungslos lesbaren Mitarbeiterausweis. Die zugehörigen Ausweisleser fragen die Ausweise über Funk ab und identifizieren dadurch die Mitarbeiter. Mitarbeiter A ist nicht an seinem Arbeitsplatz, sondern am Arbeitsplatz eines Mitarbeiters B. Ein Ausweisleser am Arbeitsplatz von Mitarbeiter B, beispielsweise an seinem vernetzten Rechner, erkennt die Nähe von Mitarbeiter A und gibt dem Netz als Position des Mitarbeiters A den Arbeitsplatz von Mitarbeiter B bekannt. Anrufe und E-Mails mit hoher Priorität für Mitarbeiter A werden nun an den Arbeitsplatz von Mitarbeiter B geleitet, solange der Ausweisleser am Arbeitsplatz von Mitarbeiter B die Nähe des Mitarbeiters A erkennt. Bei Eingang einer Nachricht für Mitarbeiter A erscheint auf dem Bildschirm von Mitarbeiter B beispielsweise die Meldung: "Neue, dringende Nachricht für Kennung A. Möchten Sie die Nachricht jetzt lesen?" Bei "Ja" wird noch einmal die Präsenz von Mitarbeiter A geprüft und danach sein Passwort abgefragt. Während die E-Mail für Mitarbeiter A angezeigt wird, wird seine Anwesenheit regelmäßig geprüft. Wenn das Fenster auf dem Bildschirm des Mitarbeiters B nicht geschlossen wird, bevor Mitarbeiter A den Arbeitsplatz von Mitarbeiter B verlässt, wird das Fenster beim Verlassen automatisch geschlossen. Bei einem Anruf für Mitarbeiter A erscheint am Endgerät von Mitarbeiter B in der Anzeige sowohl eine Identifikation des Anrufenden, soweit verfügbar, als auch eine Identifikation des Gerufenen in Form von Name und/oder Telefonnummer. Der Anrufende bekommt, soweit möglich, die Umleitung ebenfalls angezeigt.

## Patentansprüche

1. Verfahren zum Leiten von Kommunikation von einem ersten Kommunikationsteilnehmer zu einem zweiten Kommunikationsteilnehmer, aufweisend die Verfahrensschritte:
- Prüfen (1) der Anwesenheit des zweiten Kommunikationsteilnehmers an einem Aufenthaltsort bzw. einem vermuteten Aufenthaltsort und/oder Bestimmen des Aufenthaltsorts bzw. eines vermuteten Aufenthaltsorts, und
- Leiten (3) der Kommunikation zu mindestens einem für einen Empfang der Kommunikation an dem Aufenthaltsort bzw. vermuteten Aufenthaltsort verfügbaren Kommunikationsmittel (10, 11, 12).

2. Verfahren gemäß Anspruch 1,
**dadurch gekennzeichnet, dass** Informationen über den Aufenthaltsort bzw. vermuteten Aufenthaltsort des zweiten Kommunikationsteilnehmers gewonnen und/oder ausgewertet werden.

3. Verfahren gemäß Anspruch 2,
**dadurch gekennzeichnet, dass**
unter Berücksichtigung der Informationen entschieden wird, zu welchen Kommunikationsmitteln Kommunikation für den zweiten Kommunikationsteilnehmer geleitet wird.

4. Verfahren gemäß einem der vorhergehenden Ansprüche,
**dadurch gekennzeichnet, dass**
die an dem Aufenthaltsort bzw. vermuteten Aufenthaltsort des zweiten Kommunikationsteilnehmers verfügbaren Kommunikationsmittel (10, 11, 12) ermittelt werden.

5. Verfahren gemäß einem der vorhergehenden Ansprüche,
**dadurch gekennzeichnet, dass**,
falls kein Kommunikationsmittel verfügbar ist, die Kommunikation zu einem Speichermedium (14) umgeleitet wird.

6. Verfahren gemäß einem der vorhergehenden Ansprüche,
**dadurch gekennzeichnet, dass**
die Leitung automatisch erfolgt.

7. Verfahren gemäß einem der Ansprüche 1 bis 5,
**dadurch gekennzeichnet, dass**
die Leitung auf Grund einer Auswahl durch den ersten Kommunikationsteilnehmer erfolgt, wobei diesem verfügbare Kommunikationsmittel mitgeteilt werden.

8. Verfahren gemäß einem der vorhergehenden Ansprüche,
**dadurch gekennzeichnet, dass**
in die Bestimmung des Aufenthaltsortes bzw. vermuteten Aufenthaltsortes des zweiten Kommunikationsteilnehmers Daten hinsichtlich des üblichen Aufenthaltsortes des zweiten Kommunikationsteilnehmers und/oder die Uhrzeit eingehen.

9. Verfahren gemäß einem der vorhergehenden Ansprüche,
**dadurch gekennzeichnet, dass**
der Aufenthaltsort bzw. vermutete Aufenthaltsort eines dem zweiten Kommunikationsteilnehmer zugeordneten Kommunikationsmittels bestimmt wird.

10. Verfahren gemäß einem der vorhergehenden Ansprüche,
**dadurch gekennzeichnet, dass**
unter Verwendung eines biometrischen Verfahrens zur Erkennung von Personen der Aufenthaltsort bzw. vermutete Aufenthaltsort des zweiten Kommunikationsteilnehmers bestimmt wird oder seine Anwesenheit an einem Aufenthaltsort bzw. vermuteten Aufenthaltsort geprüft wird.

11. Verfahren gemäß einem der vorhergehenden Ansprüche,
**dadurch gekennzeichnet, dass**
unter Verwendung einer Zugangskontrolleinrichtung der Aufenthaltsort bzw. vermutete Aufenthaltsort des zweiten Kommunikationsteilnehmers bestimmt wird oder seine Anwesenheit an einem Aufenthaltsort bzw. vermuteten Aufenthaltsort geprüft wird.

12. Verfahren gemäß Anspruch 11,
**dadurch gekennzeichnet, dass**
die Zugangskontrolleinrichtung, welche in einem Fahrzeug angeordnet ist, die Anwesenheit des zweiten Kommunikationsteilnehmers erkennt, wobei das Fahrzeug eine entsprechende Information und/oder ein Aktivierungskommando an ein Mobilfunkendgerät im Fahrzeug weiterleitet.

13. Verfahren gemäß Anspruch 12,
**dadurch gekennzeichnet, dass**
das Fahrzeug dem Mobilfunkendgerät eine PIN übermittelt.

14. Verfahren gemäß einem der vorhergehenden Ansprüche,
**dadurch gekennzeichnet, dass**
unter Verwendung eines Verfahrens zur Positionsbestimmung der Aufenthaltsort bzw. vermutete Aufenthaltsort des zweiten Kommunikationsteilnehmers bestimmt wird oder seine Anwesenheit an einem Aufenthaltsort bzw. vermuteten Aufenthaltsort geprüft wird.

15. Verfahren gemäß einem der vorhergehenden Ansprüche,
**dadurch gekennzeichnet, dass**
es sich bei der Kommunikation um Sprachkommunikation handelt.

16. Verfahren gemäß einem der vorhergehenden Ansprüche,
**dadurch gekennzeichnet, dass**
in einem Fahrzeug auf Anwesenheit eines bekannten Kommunikationsteilnehmers geprüft wird.

17. Verfahren gemäß Anspruch 16,
**dadurch gekennzeichnet, dass**
auf die Anwesenheit des zweiten Kommunikationsteilnehmers im Fahrzeug daraus geschlossen wird, dass sich ein ihm zugeordneter Fahrzeugschlüssel in einem Zündschloss befindet.

18. Verfahren gemäß einem der vorhergehenden Ansprüche,
**dadurch gekennzeichnet, dass**
die Anwesenheit des zweiten Kommunikationsteilnehmers anhand eines Schlüssels, insbesondere eines Fahrzeugschlüssels, erkannt wird.

19. System zum Leiten von Kommunikation von einem ersten Kommunikationsteilnehmer zu einem zweiten Kommunikationsteilnehmer, aufweisend:
- Mittel zum Prüfen (1) der Anwesenheit des zweiten Kommunikationsteilnehmers an einem Aufenthaltsort bzw. einem vermuteten Aufenthaltsort und/oder Bestimmen des Aufenthaltsorts bzw. eines vermuteten Aufenthaltsorts, und
- Mittel zum Leiten (3) der Kommunikation zu mindestens einem für einen Empfang der Kommunikation an dem Aufenthaltsort bzw. vermuteten Aufenthaltsort verfügbaren Kommunikationsmittel (10, 11, 12).

20. System gemäß Anspruch 19,
**gekennzeichnet durch**
Mittel zum Gewinnen und/oder Auswerten von Informationen über den Aufenthaltsort bzw. vermuteten Aufenthaltsort des zweiten Kommunikationsteilnehmers.

21. System gemäß einem der Ansprüche 19 bis 20,
**gekennzeichnet durch**
Mittel zum Entscheiden unter Berücksichtigung der Informationen, zu welchen Kommunikationsmitteln Kommunikation für den zweiten Kommunikationsteilnehmer geleitet wird.

22. System gemäß einem der Ansprüche 19 bis 21,
**gekennzeichnet durch**
Mittel zum Ermitteln von an dem Aufenthaltsort bzw. vermuteten Aufenthaltsort des zweiten Kommunikationsteilnehmers verfügbaren Kommunikationsmitteln (10, 11, 12).

23. System gemäß einem der Ansprüche 19 bis 22,
**dadurch gekennzeichnet, dass**
das System geeignet ist, falls kein Kommunikationsmittel verfügbar ist, die Kommunikation zu einem Speichermedium (14) umzuleiten.

24. System gemäß einem der Ansprüche 19 bis 23,
**dadurch gekennzeichnet, dass**
das System geeignet ist, eine automatische Leitung zu initiieren.

25. System gemäß einem der Ansprüche 19 bis 23,
**gekennzeichnet durch**
Mittel zum Mitteilen von verfügbaren Kommunikationsmitteln an den ersten Kommunikationsteilnehmer, wobei die Leitung auf Grund einer Auswahl **durch** den ersten Kommunikationsteilnehmer erfolgt.

26. System gemäß einem der Ansprüche 19 bis 25,
**dadurch gekennzeichnet, dass**
in die Bestimmung des Aufenthaltsortes bzw. vermuteten Aufenthaltsortes des zweiten Kommunikationsteilnehmers Daten hinsichtlich des üblichen Aufenthaltsortes des zweiten Kommunikationsteilnehmers und/oder die Uhrzeit eingehen.

27. System gemäß einem der Ansprüche 19 bis 26,
**gekennzeichnet durch**
ein dem zweiten Kommunikationsteilnehmer zugeordnetes Kommunikationsmittel, wobei der Aufenthaltsort bzw. vermutete Aufenthaltsort des Kommunikationsmittels bestimmt wird.

28. System gemäß einem der Ansprüche 19 bis 27,
**gekennzeichnet durch**
Mittel zum Prüfen (1) der Anwesenheit des zweiten Kommunikationsteilnehmers an einem Aufenthaltsort bzw. einem vermuteten Aufenthaltsort und/oder Bestimmen des Aufenthaltsorts bzw. eines vermuteten Aufenthaltsorts unter Verwendung eines biometrischen Verfahrens zur Erkennung von Personen.

29. System gemäß einem der Ansprüche 19 bis 28,
**gekennzeichnet durch**
Mittel zum Prüfen (1) der Anwesenheit des zweiten Kommunikationsteilnehmers an einem Aufenthaltsort bzw. einem vermuteten Aufenthaltsort und/oder Bestimmen des Aufenthaltsorts bzw. eines vermuteten Aufenthaltsorts unter Verwendung einer Zugangskontrolleinrichtung.

30. System gemäß Anspruch 29,
**dadurch gekennzeichnet, dass**
die Zugangskontrolleinrichtung, die in einem Fahrzeug angeordnet ist, geeignet ist, die Anwesenheit des zweiten Kommunikationsteilnehmers zu erkennen, wobei die Zugangskontrolleinrichtung geeignet ist, eine entsprechende Information und/oder ein Aktivierungskommando an ein Mobilfunkendgerät im Fahrzeug weiterzuleiten.

31. System gemäß Anspruch 30,
**dadurch gekennzeichnet, dass**
das Fahrzeug geeignet ist, dem Mobilfunkendgerät eine PIN zu übermitteln.

32. System gemäß einem der Ansprüche 19 bis 31,
**gekennzeichnet durch**
Mittel zum Prüfen (1) der Anwesenheit des zweiten Kommunikationsteilnehmers an einem Aufenthaltsort bzw. einem vermuteten Aufenthaltsort und/oder Bestimmen des Aufenthaltsorts bzw. vermuteten Aufenthaltsorts unter Verwendung eines Verfahrens zur Positionsbestimmung.

33. System gemäß einem der Ansprüche 19 bis 32,
**dadurch gekennzeichnet, dass**
es sich bei der Kommunikation um Sprachkommunikation handelt.

34. System gemäß einem der Ansprüche 19 bis 33,
**gekennzeichnet durch**
ein Fahrzeug, welches geeignet ist auf Anwesenheit eines bekannten Kommunikationsteilnehmers zu prüfen.

35. System gemäß Anspruch 34,
**dadurch gekennzeichnet, dass**
auf die Anwesenheit des zweiten Kommunikationsteilnehmers im Fahrzeug daraus geschlossen wird, dass sich ein ihm zugeordneter Fahrzeugschlüssel in einem Zündschloss befindet.

36. System gemäß einem der Ansprüche 19 bis 35,
**gekennzeichnet durch**
einen Schlüssel, insbesondere einen Fahrzeugschlüssel, anhand dessen die Anwesenheit des zweiten Kommunikationsteilnehmers erkannt werden kann.

37. Mobilfunk-Endgerät zur Verwendung mit einem Verfahren nach einem der Ansprüche 1 bis 18 und/oder zur Verwendung in einem System nach einem der Ansprüche 19 bis 36.

38. SIM zur Verwendung mit einem Verfahren nach einem der Ansprüche 1 bis 18 und/oder zur Verwendung in einem System nach einem der Ansprüche 19 bis 36.

39. Informationsverbindung zwischen einer Zugangskontrolleinrichtung eines Fahrzeugs, insbesondere einem Schloss, und einem Mobilfunkendgerät in dem Fahrzeug zur Verwendung mit einem Verfahren nach einem der Ansprüche 1 bis 18 und/oder zur Verwendung in einem System nach einem der Ansprüche 19 bis 36.
